# EUROPÄISCHE PATENTSCHRIFT

(11) **EP 0 770 361 B1**
(45) Veröffentlichungstag und Bekanntmachung des Hinweises auf die Patenterteilung: **22.05.2002**
(21) Anmeldenummer: 96117115.4
(22) Anmeldetag: 24.10.1996
(51) Int. Cl.: A61C 1/00, A61C 19/00

(54) **Steuerschaltung für ein zahnärztliches Handstück**
Switching circuit for a dental handpiece
Circuit de commande pour une pièce à main pour l'art dentaire

(30) Priorität: 24.10.1995 DE 19539534
(43) Veröffentlichungstag der Anmeldung: 02.05.1997
(73) Patentinhaber: KALTENBACH & VOIGT GMBH & CO., 88400 Biberach (DE)
(72) Erfinder: Gmeinder, Hermann, 88400 Biberach-Mettenberg (DE)
(74) Vertreter: Schmidt-Evers, Jürgen, Dipl.-Ing.

(56) Entgegenhaltungen:
- EP-A- 0 385 792
- WO-A-96/28111
- US-A- 4 952 142

## Beschreibung

Die Erfindung bezieht sich auf eine Steuerschaltung für ein zahnärztliches Handstück nach dem Oberbegriff des Anspruches 1. Insbesondere betrifft die Erfindung eine Steuerschaltung für eine Beleuchtungsseinrichtung und eine Heizeinrichtung, die in einem zahnärztlichen Handstück vorhanden sind.

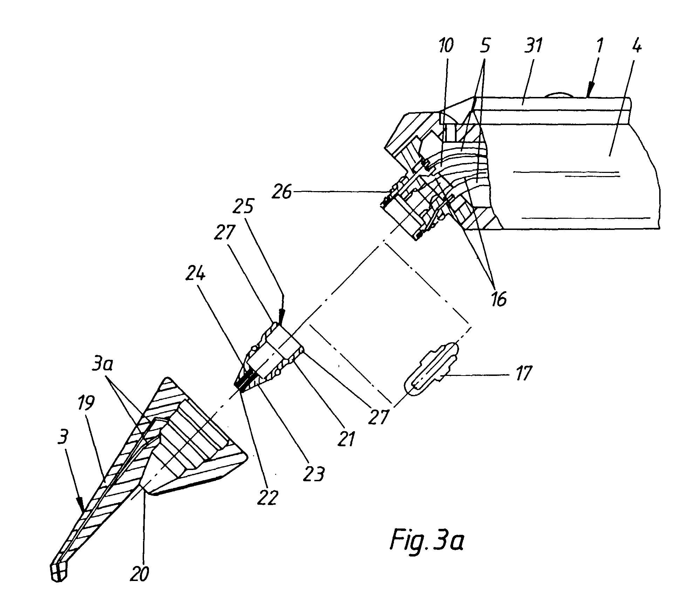

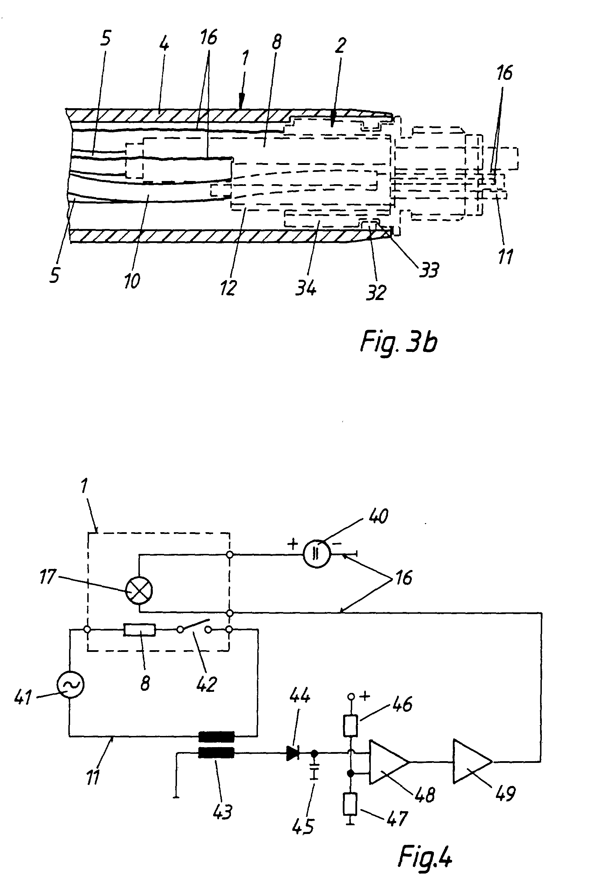

Figur 3a und 3b zeigen ein derartiges zahnärztliches Handstück, wie es beispielsweise aus der DE-A-37 34 861, DE-C2-37 34 863 und DE-C2-37 34 864 der Anmelderin bekannt ist. Figur 3a und 3b zeigen beispielhaft ein zahnärztliches Spritzhandstück, welches eine Griffhülse 4 umfaßt, die an ihrem einen Ende ein abnehmbares Medien-Anschlußstück 2 und an ihrem anderen Ende eine Medien-Austrittseinrichtung 3 aufweist. In der Griffhülse 4 sind Medienleitungen 5 angeordnet, die von dem Medien-Anschlußstück 2 zur Medien-Austrittseinrichtung 3 führen, wobei das Medien-Anschlußstück 2 Anschlüsse z.B. für die Medien Luft und Wasser aufweist. Zudem weist das Medien-Anschlußstück eine zur Erwärmung der Luft dienende elektrische Heizeinrichtung 8 auf, der ein entsprechender Stromkreis 11 zugeordnet ist. Wie aus Fig. 3b ersichtlich, zweigt von der Medienleitung 5 für Luft eine Zweigleitung 10 ab, die zu einem Elektroschalter 12 führt, der bei Betätigung den zur Heizeinrichtung 8 führenden Stromkreis 11 schließt. Die elektrische Heizeinrichtung 8 besteht beispielsweise aus einer in einem Heizrohr angeordneten Heizwendel, wobei das Heizrohr seinerseits in der Medienleitung 5 für Luft angeordnet ist. Das Medien-Anschlußstück 2 ist abnehmbar ausgestaltet. Hierzu besitzt das Medien-Anschlußstück 2 einen äußeren Klemmring 32, um einen Klemmsitz des Anschlußstückes 2 in der Griffhülse 4 zu erzielen. Dabei ist der Klemmring 32 in einer Außennut 33 einer Kupplungshülse 34 des Anschlußstückes 2 angeordnet.

Des weiteren weist die Griffhülse 4 einen Stromkreis 16 für den Betrieb einer aus dem Bereich der Medien-Austrittseinrichtung 3 Licht aussendenden Glühlampe 17 auf. Zur Befestigung der Glühlampe 17 ist eine abnehmbare Abdeckkappe 21 vorhanden, deren handstückfernes Ende 22 lichtdurchlässig ist. Die Abdeckkappe 21 wird mit ihrem handstückseitigen Ende 25 in eine am medienaustrittsseitigen Stirnende der Griffhülse 4 angeordneten Aufnahmemuffe 26 eingesteckt. Andererseits wird eine Kanüle 19 drehbar auf die Abdeckkappe 21 aufgesteckt. Zur Ermöglichung der Lichtdurchlässigkeit besitzt das handstückferne Ende 22 der Abdeckkappe 21 eine Licht-Durchlaßöffnung 23, in der ein Lichtleiter 24, beispielsweise ein Glaseinsatz, angeordnet ist. Die Kanüle 19 weist Kanäle 3a für Luft und Wasser auf. Ebenso besitzt die Kanüle 19 eine Licht-Durchtrittsöffnung 20 für das aus der Glühlampe 17 ausgesendete Licht. Der Medienübertritt von Luft und Wasser von der Aufnahmemuffe 26 in die Medienkanäle 3a der Kanüle 19 erfolgt mit einer an sich bekannten Ringkanalanordnung.

Figur 4 zeigt die bekannte Ausführung einer Steuerschaltung zum Betreiben der Heizeinrichtung 8 sowie des Beleuchtungsmittels 17 des in Fig. 3a und 3b dargestellten zahnärztlichen Handstücks. In dem zahnärztlichen Handstück 1 ist neben der Beleuchtungseinrichtung 17 und der Heizeinrichtung 8, die rein schematisch als Widerstand dargestellt ist, ein Schalter 42 vorhanden, durch den der Heizstromkreis 11 geöffnet bzw. geschlossen und die von einer Wechselspannungsquelle 41 gelieferte Versorgungsspannung aus- bzw. eingeschaltet werden kann. Mit Schließen des Schalters 42 fließt somit im Heizstromkreis 11 ein Heizstrom, wobei abhängig von der Größe des Heizstromes durch den Spannungsabfall in der Primärwicklung eines Übertragers 43 eine Wechselspannung in der Sekundärwicklung des Übertragers 43 induziert wird. Während sich die Primärwicklung des Übertragers 43 in dem Heizstromkreis 11 befindet, ist die Sekundärwicklung Bestandteil des Beleuchtungsstromkreises zum Betreiben der Beleuchtungseinrichtung 17. Die in der Sekundärwicklung des Übertragers 43 induzierte Wechselspannung wird von einer Diode 44 gleichgerichtet und von einem Kondensator 45 geglättet und gelangt anschließend zu einem mit zwei Widerständen 46 und 47 geschalteten Komparator 48. Der Komparator 48 vergleicht die an seinem Eingangsanschluß anliegende gleichgerichtete und geglättete Spannung mit einem bestimmten durch den Widerstand 47 festgelegten Schwellenspannungswert und schaltet bei Erreichen dieses Schwellenspannungswertes einen nachgeschalteten Leistungsverstärker 49, so daß die Beleuchtungseinrichtung 17 mit der an ihr anliegenden Versorgungsspannung einer Gleichspannungsquelle 40 betrieben wird.

Wie aus Fig. 4 ersichtlich, ist der Beleuchtungsstromkreis 16 induktiv durch den Transformator 43 mit dem Heizstromkreis 11 gekoppelt. Mit Einschalten des Schalters 42 wird somit nicht nur der Heizstromkreis 11, sondern auch der Beleuchtungsstromkreis 16 betrieben. Die in Fig. 4 dargestellte bekannte Steuerschaltung weist jedoch verschiedene Nachteile auf.

Der Übertrager bzw. Transformator 43 ist ein sehr volumiges Bauteil, so daß durch die Verwendung des Übertragers 43 der gesamte Platzbedarf der Steuerschaltung steigt. Des weiteren ist mit der in Fig. 4 dargestellten Schaltung keine Steuerung des Heizstromes möglich. Insbesondere ist der Beleuchtungsstromkreis 16 stets von dem Heizstromkreis 11 abhängig, d.h. der in dem Beleuchtungsstromkreis 16 fließende Beleuchtungsstrom ist stets davon abhängig, daß in dem Heizstromkreis 11 ein Heizstrom fließt. Es ist nicht möglich, die Beleuchtungseinrichtung 17 ohne das Vorhandensein eines Heizstromes zu betreiben.

Zudem ist der in dem Beleuchtungsstromkreis 16 fließende Beleuchtungsstrom unmittelbar von der Höhe des in dem Heizstromkreis 11 fließenden Heizstromes abhängig. Ein weiteres Problem des in Fig. 4 dargestellten bekannten Schaltung liegt darin, daß durch die direkte Abhängigkeit des Beleuchtungsstromes von dem Heizstrom für eine stimmte Beleuchtungseinrichtung 17 nur ein bestimmter Heizverbraucher 8 eingesetzt werden kann. Wird andernfalls der Heizverbraucher 8 ausgetauscht, so kann aufgrund seines veränderten Widerstandswertes der in dem Heizstromkreis 11 fließender Heizstrom ggf. nicht mehr ausreichen, den für den Betrieb der Beleuchtungseinrichtung 17 erforderlichen Betriebsstrom im Beleuchtungsstromkreis 16 hervorzurufen.

Der Erfindung liegt daher die Aufgabe zugrunde, eine Steuerschaltung für ein zahnärztliches Handstück mit einer Beleuchtungseinrichtung und einer Heizeinrichtung zu schaffen, die die zuvor beschriebenen Nachteile und Probleme vermeidet.

Die Aufgabe wird erfindungsgemäß durch die in Anspruch 1 angegebenen Merkmale gelöst.

Die erfindungsgemäße Steuerschaltung ist derart ausgebildet, daß sie in dem Beleuchtungsstromkreis zum Betreiben einer Beleuchtungseinrichtung einen Beleuchtungsstrom hervorruft, der unabhängig von der Höhe des in dem Heizstromkreis fließenden Heizstrom ist. Insbesondere ist der in dem Beleuchtungsstromkreis fließende Beleuchtungsstrom davon unabhängig, ob die Heizeinrichtung betrieben wird oder nicht, d.h. ob in dem Heizstromkreis ein Heizstrom fließt oder nicht.

Des weiteren ist mit der erfindungsgemäßen Steuerschaltung eine Steuerung der Leistung der Heizeinrichtung möglich. Die Leistungssteuerung durch die erfindungsgemäße Steuerschaltung erfolgt dabei dadurch, daß der Heizstromkreis vorübergehend unterbrochen bzw. deaktiviert wird, so daß die mittlere Heizleistung abhängig von der Dauer der Unterbrechung bzw. Deaktivierung steuerbar ist. Vorteilhafterweise erfolgt die Unterbrechung bzw. Deaktivierung des Heizstromkreises für die Dauer einer Halbwelle (oder eines Vielfachen davon) der Versorgungsspannung des Heizstromkreises.

Insbesondere ist bei der erfindungsgemäßen Steuerschaltung vorteilhaft, daß die wesentlichen Bauteile der Steuerschaltung als integrierte Schaltkreise vorliegen, so daß die erfindungsgemäße Steuerschaltung in Form eines Mikroprozessors (CPU) realisierbar ist. Durch entsprechende Programmierung des Mikroprozessors kann die erfindungsgemäße Steuerschaltung auf einfache Art und Weise an verschiedene Bedürfnisse angepaßt werden.

Vorteilhafte Ausgestaltungen der Erfindung sind in den Unteransprüchen angegeben.

Die Erfindung wird nachfolgend unter Bezugnahme auf die Zeichnungen anhand eines bevorzugten Ausführungsbeispiels beschrieben. Es zeigen:
- Fig. 1: ein Ausführungsbeispiel der erfindungsgemäßen Steuerschaltung,
- Fig. 2: Signalverläufe bei dem in Fig. 1 dargestellten erfindungsgemäßen Ausführungsbeispiel,
- Fig. 3a und 3b: ein zahnärztliches Handstück mit einer Beleuchtungsseinrichtung und einer Heizeinrichtung, auf die die erfindungsgemäße Steuerschaltung anwendbar ist, und
- Fig. 4: eine bekannte Steuerschaltung für eine Beleuchtungseinrichtung und eine Heizeinrichtung eines zahnärztlichen Handstücks.

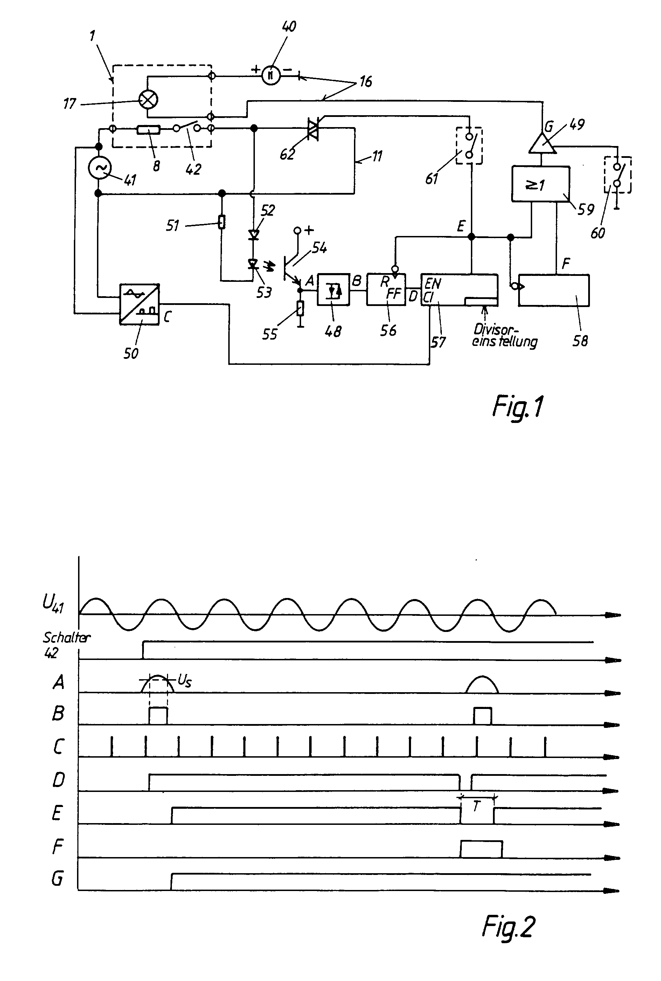

Fig. 1 zeigt in Form eines schematischen Blockdiagramms den Aufbau eines Ausführungsbeispiels der erfindungsgemäßen Steuerschaltung.

In Fig. 1 sind Komponenten, die den in Fig. 3 und 4 dargestellten Komponenten entsprechen, mit identischen Bezugszeichen versehen. Auf eine wiederholte Beschreibung dieser Bauteile kann somit verzichtet werden.

In einem Heizstromkreis 11 ist eine Wechselspannungsquelle 41, eine Heizeinrichtung 8, ein Schalter 42 sowie ein steuerbarer Schalter 62 angeordnet. Der steuerbare Schalter 62 kann beispielsweise durch einen Sidac, einen Triac oder einen in einer Gleichrichterbrücke angesteuerten Transistor realisiert sein. In einem Beleuchtungsstromkreis 16 ist eine Gleichstromquelle 40, eine Beleuchtungseinrichtung 17 sowie ein Leistungsverstärker 49 angeordnet. Die Beleuchtungseinrichtung 17, die Heizeinrichtung 8 sowie der Schalter 42 sind in einem zahnärztlichen Handstück 1 vorhanden. Der Heizstromkreis 11 ist mit dem Beleuchtungsstromkreis 16 durch die aus verschiedenen Bauteilen bestehende erfindungsgemäße Steuerschaltung verbunden. Dabei ist der Beleuchtungsstromkreis 16 mit dem Heizstromkreis 11 über eine Optokoppleranordnung, bestehend aus Leuchtdioden 52, 53 und einer Fotowandleranordnung 54, 55 gekoppelt. Die Leuchtdioden 52, 53 sind in Serie mit einem Widerstand 51 geschaltet, wobei diese Serienschaltung parallel zu dem steuerbaren Schaltelement 62 in dem Heizstromkreis 11 angreift, so daß die Optokoppleranordnung parallel zu dem Heizstromkreis 11 geschaltet ist. Die erfindungsgemäße Steuerschaltung umfaßt des weiteren einen Komparator 48, ein Flip-Flop 56, einen Zähler 57, eine monostabile Kippstufe (Monoflop) 58, ein ODER-Funktionsglied 59 sowie einen Nullspannungsdetektor 50, der parallel zu der Wechselspannungsquelle 41 des Heizstromkreises 11 geschaltet ist. Des weiteren sind Vorwahlschalter 60 und 61 vorhanden, die beispielsweise im zahnärztlichen Handstück integriert sind und zum separaten Ein- und Ausschalten des Beleuchtungsstromes bzw. Heizstromes dienen. Selbstverständlich können die Schalter auch an anderer Stelle der in Fig. 1 dargestellten Schaltung angeordnet sein.

Die Funktion der in Fig. 1 dargestellten erfindungsgemäßen Steuerschaltung soll nachfolgend unter Bezugnahme auf die in Fig. 2 dargestellten Signalverläufe erläutert werden.

Im Grundzustand sperrt der steuerbare Schalter 62, so daß in dem Heizstromkreis 11 kein Heizstrom fließt. An den Leuchtdioden 52 und 53 sowie dem Widerstand 51, die parallel zu dem steuerbaren Schalter 62 geschaltet sind, fällt jedoch eine Wechselspannung ab, die durch den Optokoppler in eine einweggleichgerichtete Spannung umgewandelt und an den Komparator 48 angelegt wird. In Fig. 2 ist der Spannungsverlauf der von der Wechselspannungsquelle 41 gelieferten Wechselspannung U₄₁ und des Ausgangssignals A des Optokopplers sowie der Schaltzustand des Schalters 42 dargestellt. Der Komparator 48 vergleicht jede der an seinem Eingangsanschluß anliegenden Spannungshalbwellen mit einer voreingestellten Schwellenspannung U_{S} und schaltet durch, wenn die an dem Eingangsanschluß des Komparators anliegende einweggleichgerichtete Spannung größer als die Schwellenspannung U_{S} ist. Das Ausgangssignal B des Komparators 48 liegt an dem Setzeingang des Flip-Flops 56 an.

Das Flip-Flop 56 ist vorzugsweise als sog. RS-Flip-Flop ausgebildet und weist neben seinem Setzeingang einen Rücksetz-(Reset-)Eingang auf. Das RS-Flip-Flop 56 verändert sein Ausgangssignal D nur dann, wenn entweder an seinem Setzeingang das Signal B einen hohen Pegel annimmt oder das an dem Rücksetzeingang R anliegende Signal E von einem hohen Pegel auf einen niedrigen Pegel abfällt, da das Flip-Flop 56an seinenm Rücksetzeingang R mit einer abfallenden Flanke des Rücksetzsignals E gesteuert wird. Nimmt am Setzeingang das Signal B einen hohen Pegel an, so tritt entsprechend am Ausgangssignal des Flip-Flops 56 solange das Ausgangssignal D mit dem hohen Pegel auf, bis am Rücksetzsignal des Flip-Flop 56 ein Rücksetzsignal E mit abfallender Taktflanke auftritt, wodurch das Ausgangssignal D des Flip-Flops auf einen niedrigen Pegel gesetzt wird.

Das Ausgangssignal D des Flip-Flop 56 liegt am Freigabeeingang EN des Zählers 57 an und aktiviert den Zähler 57 solange es einen hohen Pegel annimmt. Der Takteingang Cl des Zählers 57 ist mit dem Ausgangssignal des Nullspannungs-Detektors 50 verbunden, der die Versorgungswechselspannung U₄₁ der Wechselspannungsquelle 41 des Heizstromkreises 11 überwacht. Der Nullspannungs-Detektor 50 erzeugt bei jedem Nulldurchgang der Wechselspannung U₄₁ einen Impuls, der von dem Zähler 57 erfaßt und gezählt wird. Der Zähler 57 erzeugt solange ein Ausgangssignal E hohen Pegels, bis eine bestimmte Anzahl an Impulsen des Nullspannungs-Detektors gezählt worden ist. Bei dem beispielhaften Signalverlauf in Fig. 2 wird der Zähler 57 nach zehn erfaßten Impulsen des Nullspannungs-Detektors 50 deaktiviert, so daß das Ausgangssignal E nach dem zehnten Impuls des Ausgangssignals C des Nullspannungs-Detektors 50 von dem hohen Pegel auf den niedrigen Pegel fällt. Durch die abfallende Flanke des Ausgangssignals E des Zählers 57 wird einerseits das Flip-Flop 56 zurückgesetzt, d.h. das Ausgangssignal D des Flip-Flops 56 nimmt den niedrigen Pegel an, und andererseits wird durch das Ausgangssignal D das Flip-Flop 56 mit niedrigem Pegel der Zähler 57 deaktiviert und zurückgesetzt. Über eine Veränderung des Devisors des Zählers 57 kann die Anzahl der erfaßten Impulse verändert werden, nach welcher der Zähler 57 und das Flip-Flop 56 zurückgesetzt werden sollen.

Ist nach dem Rücksetzen des Flip-Flops 56 und des Zählers 57 der Schalter 42 weiterhin eingeschaltet, so wiederholt sich der gesamte in Fig. 2 dargestellte Vorgang erneut.

Das Ausgangssignal E des Zählers 57 ist über ein ODER-Funktionsglied 59 mit dem Leistungsverstärker 49 des Beleuchtungsstromkreises 16 verbunden, so daß der Beleuchtungsstromkreis 16 jedenfalls dann aktiviert wird, wenn das Ausgangssignal E des Zählers 57 auf hohem Pegel liegt. Der Leistungsverstärker 49 des Beleuchtungsstromkreises 16 kann auch über den Schalter 60 angesteuert werden, so daß die Beleuchtungseinrichtung 17 separat von der Heizungseinrichtung 8 betrieben und vorgewählt werden kann.

An einem weiteren Eingangsanschluß des ODER-Funktionsgliedes 59 liegt das Ausgangssignal F einer monostabilen Kippstufe (Mono-Flop) 58 an, welches von dem Ausgangssignal E des Zählers 57 mit abfallender Taktflanke getriggert bzw. geschaltet wird. Das Mono-Flop 58 erzeugt somit immer dann ein Ausgangssignal F mit hohem Pegel, wenn das Ausgangssignal E des Zählers 57 von einem hohen auf einen niedrigen Pegel fällt. Dies ist nur dann der Fall, wenn zugleich der Zähler 57 und das Flip-Flop 56 zurückgesetzt und vorübergehend deaktiviert werden. In diesem Fall nimmt das Ausgangssignal G des ODER-Funktionsgliedes 59 einen hohen Pegel an, obwohl das Ausgangssignal E des Zählers 57 auf niedrigem Pegel liegt, da die monostabile Kippstufe 58 ein Ausgangssignal F mit hohen Pegel erzeugt. Dabei liegt das Ausgangssignal F der monostabilen Kippstufe 58 solange auf hohem Pegel, wie es für die monostabile Kippstufe eingestellt worden ist. Insbesondere kann - wie auch in Fig. 2 gezeigt - die sog. Monoflopzeit, in der das Ausgangssignal F den hohen Pegel annimmt, länger als eine Halbwelle der Wechselspannung U₄₁ sein. Durch das Bereitstellen der monostabilen Kippstufe 58 wird daher auch dann ein Betreiben des Beleuchtungsstromkreises 16 für die Dauer der sog. Monoflopzeit gewährleistet, wenn der Schalter 42 ausgeschaltet worden ist. Die Beleuchtungseinrichtung 17 leuchtet somit um die voreinstellbare Monoflopzeit der monostabilen Kippstufe 58 nach, was für zahnärztliche Behandlungen in vielen Fällen wünschenswert ist.

Die Steuerung des Heizstromkreises 11 mit der erfindungsgemäßen Steuerschaltung erfolgt wie folgt:

Wie in Fig. 2 dargestellt, liegt das Ausgangssignal E des Zählers 57 solange auf einem hohen Pegel, bis die voreingestellte Anzahl an Impulsen des Nullspannungs-Detektors 50 erfaßt worden ist. Das Ausgangssignal E des Zählers 57 dient - wie aus Fig. 1 ersichtlich - zugleich als Steuersignal für den steuerbaren Schalter 62, der in dem Heizstromkreis 11 angeordnet ist. Liegt das Ausgangssignal E des Zählers 57 auf hohem Pegel, so wird der steuerbare Schalter 62 leitend geschaltet. Andererseits sperrt der steuerbare Schalter 62, sobald das Signal E auf den niedrigen Pegel abfällt. Durch die in Fig. 2 dargestellte vorübergehende Unterbrechung des Ausgangssignals E wird auch die Aktivierung des Heizstromkreises 11 vorübergehend unterbrochen. Wird der zeitliche Abstand dieser Unterbrechungen des Heizstromkreises 11 verkürzt, so kann abhängig von einem Abstand der Unterbrechungen die durchschnittliche Heizleistung der Heizeinrichtung 8 gesteuert werden. Dies erfolgt erfindungsgemäß durch Programmieren des Divisors des Zählers 57, da in Abhängigkeit vom eingestellten Divisorwert die Häufigkeit der Ausschaltzeit des steuerbaren Schalters 62 verändert wird. Durch Verändern der in Fig. 2 dargestellten Ausschaltzeit T des steuerbaren Schalters 62, die dem Zeitintervall entspricht, in dem das Ausgangssignal E des Zählers 57 den niedrigen Pegel annimmt, kann die Leistung der Heizeinrichtung 8 in bestimmten Grenzen variiert werden.

Mit der in Fig. 1 dargestellten erfindungsgemäßen Steuerschaltung kann somit nicht nur die Beleuchtungsseinrichtung 17 unabhängig von der Höhe des in dem Heizstromkreis 11 fließenden Heizstromes betrieben werden, sondern es ist zudem eine Steuerung des Heizstromes möglich. Durch die Schalter 60 und 61 kann sowohl die Beleuchtungseinrichtung 17 als auch die Heizeinrichtung 8 vorgewählt werden. Ebenso ist mit der erfindungsgemäßen Steuerschaltung ein Betreiben der Beleuchtungseinrichtung 17 ohne Betreiben der Heizeinrichtung 8 möglich. Die in Fig. 1 gezeigte erfindungsgemäße Steuerschaltung eignet sich für verschiedene Typen von Heizeinrichtungen 8, da der in dem Betriebsstromkreis 16 fließende Betriebsstrom unabhängig von der Höhe des in dem Heizstromkreis 11 fließenden Heizstromes ist und somit die Heizeinrichtung 8 beliebig austauschbar ist. Ein weiterer Vorteil der erfindungsgemäßen Steuerschaltung liegt darin, da zumindest die in Fig. 1 als diskrete Bauelemente dargestellten Schaltungskomponenten 50, 56, 57, 58 und 59 als integrierte Schaltungen vorliegen und in bereits vorhandene Mikroprozessorbausteine (CPU) nachgebildet werden können. Insbesondere ist mit der erfindungsgemäßen Steuerschaltung durch entsprechenden Programmierung des Mikroprozessors (CPU) eine einfache durch Software gesteuerte Realisierung der in Fig. 1 dargestellten Schaltung möglich.

## Patentansprüche

1. Steuerschaltung zur Steuerung einer Beleuchtungseinrichtung (17) und einer Heizeinrichtung (8) für ein zahnärztliches Handstück (1), mit einem Beleuchtungsstromkreis (16) zum Betreiben der Beleuchtungseinrichtung (17) und
mit einem mit dem Beleuchtungsstromkreis (16) gekoppelten Heizstromkreis (11) zum Betreiben der Heizeinrichtung (8),
**dadurch gekennzeichnet,**
**daß** die Steuerschaltung derart ausgebildet ist, daß sie die Beleuchtungseinrichtung (17) unabhängig von der Höhe des in dem Heizstromkreis (11) fließenden Heizstromes steuert.

2. Steuerschaltung nach Anspruch 1,
**dadurch gekennzeichnet,**
**daß** die Steuerschaltung die Leistung der Heizeinrichtung (8) steuert.

3. Steuerschaltung nach Anspruch 2,
**dadurch gekennzeichnet,**
**daß** die Steuerschaltung die Leistung der Heizeinrichtung (8) unabhängig von der Höhe des in dem Beleuchtungsstromkreis (16) fließenden Beleuchtungsstroms steuert.

4. Steuerschaltung nach Anspruch 2 oder 3,
**dadurch gekennzeichnet,**
**daß** die Steuerschaltung die Leistung der Heizeinrichtung (8) steuert, indem sie den Heizstromkreis (11) kurzzeitig deaktiviert bzw. unterbricht.

5. Steuerschaltung nach Anspruch 4,
**dadurch gekennzeichnet,**
**daß** die Deaktivierung bzw. Unterbrechung des Heizstromkreises (11) für die Dauer einer Halbwelle der Versorgungsspannung (U₄₁) des Heizstromkreises (11) oder für ein Vielfaches davon erfolgt.

6. Steuerschaltung nach einem der vorhergehenden Ansprüche,
**dadurch gekennzeichnet,**
**daß** die Steuerschaltung derart ausgestaltet ist, daß der Heizstromkreis (11) und der Beleuchtungsstromkreis (16) über entsprechend vorhandene Schalter (61,60) getrennt voneinander ein- und ausschaltbar sind.

7. Steuerschaltung nach einem der vorhergehenden Ansprüche,
**dadurch gekennzeichnet,**
**daß** die Steuerschaltung einen mit dem Heizstromkreis (11) parallel geschalteten Optokoppler (52-55) umfaßt, der ausgangsseitig eine einweggleichgerichtete Spannung (A) liefert.

8. Steuerschaltung nach einem der vorhergehenden Ansprüche,
**dadurch gekennzeichnet,**
**daß** die Steuerschaltung einen Zähler (57) umfaßt, der die Anzahl der Nulldurchgänge der Spannung (U₄₁) einer im Heizstromkreis (11) vorhandenen Versorgungs-Wechselspannungsquelle (41) erfaßt.

9. Steuerschaltung nach Anspruch 8,
**dadurch gekennzeichnet,**
**daß** der Zähler (57) nach einer einstellbaren Anzahl von Nulldurchgängen der Spannnung (U₄₁) der Versorgungs-Wechselspannung (U₄₁) den Heizstromkreis (11) vorübergehend deaktiviert bzw. unterbricht.

10. Steuerschaltung nach Anspruch 9,
**dadurch gekennzeichnet,**
**daß** der Zähler (57) eingangsseitig mit einem Nullspannungsdetektor (50) verbunden ist, der eingangsseitig mit der Versorgungs-Wechselspannungsquelle (41) des Heizstromkreises (11) verbunden ist.

11. Steuerschaltung nach einem der Ansprüche 8 bis 10,
**dadurch gekennzeichnet,**
**daß** der Zähler (57) ausgangsseitig mit einem in dem Heizstromkreis (11) angeordneten steuerbaren Schalter (62) verbunden ist.

12. Steuerschaltung nach Anspruch 11,
**dadurch gekennzeichnet,**
**daß** der Zähler (57) den steuerbaren Schalter (62) leitend schaltet, wenn das Ausgangssignal (E) des Zählers (57) einen hohen Pegel annimmt, und den steuerbaren Schalter (62) sperrend schaltet, wenn das Ausgangssignal (E) des Zählers (57) einen niedrigen Pegel annimmt.

13. Steuerschaltung nach Anspruch 7 und einem der Ansprüche 8 bis 12,
**dadurch gekennzeichnet**
**daß** der Optokoppler (52-55) ausgangsseitig mit einem Komparator (48) verbunden ist, welcher über ein Flip-Flop (56) an den Zähler (57) angeschlossen ist.

14. Steuerschaltung nach Anspruch 13,
**dadurch gekennzeichnet,**
**daß** der Setzeingang des Flip-Flops (56) mit dem Ausgangssignal (B) des Komparators (48) beaufschlagt ist,
**daß** das Ausgangssignal (D) des Flip-Flops (56) an einem Freigabeanschluß (EN) des Zählers (57) anliegt, und
**daß** das Ausgangssignal (E) des Zählers (57) an dem Rücksetz-Eingang ( R ) des Flip-Flops (56) anliegt.

15. Steuerschaltung nach Anspruch 14,
**dadurch gekennzeichnet,**
**daß** das Flip-Flop (56) an dem Rücksetz-Eingang ( R ) mit einer abfallenden Flanke des Ausgangssignals (E) des Zählers (57) gesteuert wird.

16. Steuerschaltung nach einem der vorhergehenden Ansprüche,
**dadurch gekennzeichnet,**
**daß** die Steuerschaltung ein Nachleuchten der Beleuchtungseinrichtung (17) für ein bestimmtes Zeitintervall ermöglicht, wenn der Heizstromkreis (11) ausgeschaltet ist.

17. Steuerschaltung nach einem der Ansprüche 8 bis 16,
**dadurch gekennzeichnet,**
**daß** das Ausgangssignal (E) des Zählers (57) als Betriebssignal für den Beleuchtungsstromkreis (16) dient.

18. Steuerschaltung nach Anspruch 17,
**dadurch gekennzeichnet,**
**daß** das Ausgangssignal (E) des Zählers (57) als Eingangssignal an einem im Beleuchtungsstromkreis (16) vorhandenen Verstärker (49) anliegt.

19. Steuerschaltung nach Anspruch 17 oder 18,
**dadurch gekennzeichnet,**
**daß** das Ausgangssignal (E) des Zählers (57) als ein Eingangssignal an einem ODER-Funktionsglied (59) anliegt, dessen Ausgangssignal als Betriebssignal für den Beleuchtungsstromkreis (16) dient, wobei als ein weiteres Eingangssignal des ODER-Funktionsgliedes (59) das Ausgangssignal (F) einer monostabilen Kippstufe (58) anliegt, dessen Eingang mit dem Ausgangssignal (E) des Zählers (57) beaufschlagt ist.

20. Steuerschaltung nach Anspruch 19,
**dadurch gekennzeichnet,**
**daß** die monostabile Kippstufe (58) durch eine abfallende Flanke des Ausgangssignals (E) des Zählers (57) getriggert wird.

21. Steuerschaltung nach einem der vorhergehenden Ansprüche,
**dadurch gekennzeichnet,**
**daß** die Steuerschaltung in Form einer integrierten Schaltung ausgebildet ist.

## Claims

1. Control circuit for controlling an illumination device (17) and a heating device (8) for a dental handpiece (1), having an illumination current circuit (16) for operating the illumination device (17) and having a heating current circuit (11), coupled with the illumination current circuit (16), for operating the heating device (8),
**characterised in that**,
the control circuit is so constituted that it controls the illumination device (17) independently of the level of the heating current flowing in the heating current circuit (11) .

2. Control circuit according to claim 1,
**characterised in that**,
the control circuit controls the power of the heating device (8).

3. Control circuit according to claim 2,
**characterised in that**,
the control circuit controls the power of the heating device (8) independently of the level of the illumination current flowing in the illumination current circuit (16).

4. Control circuit according to claim 2 or 3,
**characterised in that**,
the control circuit controls the power of the heating device (8) **in that** it briefly deactivates or interrupts the heating current circuit (11).

5. Control circuit according to claim 4,
**characterised in that**,
the deactivation or interruption of the heating current circuit (11) is effected for the duration of a half-wave of the supply voltage (U₄₁) of the heating current circuit (11) or for a multiple thereof.

6. Control circuit according to any preceding claim,
**characterised in that**,
the control circuit is so configured that the heating current circuit (11) and the illumination current circuit (16) can be switched on and switched off separately from one another by means of correspondingly present switches (61, 60).

7. Control circuit according to any preceding claim,
**characterised in that**,
the control circuit includes an optocoupler (52-55) connected in parallel with the heating current circuit (11), which optocoupler delivers on the output side a half-wave rectified voltage (A).

8. Control circuit according to any preceding claim,
**characterised in that**,
the control circuit includes a counter (57) which detects the number of zero-crossings of the voltage (U₄₁) of a supply a.c. voltage source (41) present in the heating current circuit (11).

9. Control circuit according to claim 8,
**characterised in that**,
the counter (57) temporarily deactivates or interrupts the heating current circuit (11) after a selectable number of zero-crossings of the voltage (U₄₁) of the supply a.c. voltage (U₄₁).

10. Control circuit according to claim 9,
**characterised in that**,
the counter (57) is connected on the input side with a zero-voltage detector (50) which is connected on the input side with the supply a.c. voltage source (41) of the heating current circuit (11).

11. Control circuit according to any of claims 8 to 10,
**characterised in that**,
the counter (57) is connected on the output side with a controllable switch (62) arranged in the heating current circuit (11).

12. Control circuit according to claim 11,
**characterised in that**,
the counter (57) switches the controllable switch (62) to conduct when the output signal (E) of the counter (57) assumes a high level, and switches the controllable switch (62) to block when the output signal (E) of the counter (57) assumes a low level.

13. Control circuit according to claim 7 and any of claim 8 to 12,
**characterised in that**,
the optocoupler (52-55) is connected on the output side with a comparator (48) which is connected to the counter (57) via a flip-flop (56).

14. Control circuit according to claim 13,
**characterised in that**,
the set input of the flip-flop (56) is acted upon with the output signal (B) of the comparator (48),
**in that** the output signal (D) of the flip-flop (56) is applied to an enable terminal (EN) of the counter (57) and
**in that** the output signal (E) of the counter (57) is applied to the reset input (R) of the flip-flop (56).

15. Control circuit according to claim 14,
**characterised in that**,
the flip-flop (56) is controlled at the reset input (R) with a falling edge of the output signal (E) of the counter (57).

16. Control circuit according to any preceding claim,
**characterised in that**,
the control circuit makes possible a persisting illumination of the illumination device (17) for a certain time interval when the heating current circuit (11) is switched off.

17. Control circuit according to any of claims 8 to 16,
**characterised in that**,
the output signal (E) of the counter (57) serves as operating signal for the illumination current circuit (16).

18. Control circuit according to claim 17,
**characterised in that**,
the output signal (E) of the counter (57) is applied as input signal to an amplifier (49) present in the illumination current circuit (16).

19. Control circuit according to claim 17 or 18,
**characterised in that**,
the output signal (E) of the counter (57) is applied as an input signal to an OR-functional member (59) the output signal of which serves as operating signal for the illumination current circuit (16), the output signal (F) of a monostable switching stage (58) being applied as a further input signal of the OR-functional member (59), the input of which monostable switching stage is acted upon with the output signal (E) of the counter (57).

20. Control circuit according to claim 19,
**characterised in that**,
the monostable switching stage (58) is triggered by a falling edge of the output signal (E) of the counter (57).

21. Control circuit according to any preceding claim,
**characterised in that**,
the control circuit is constituted in the form of an integrated circuit.

## Revendications

1. Circuit de commande pour commander un dispositif d'éclairage (17) et un dispositif de chauffage (8) destiné à une pièce à main (1) de dentisterie avec un circuit d'éclairage (16) pour faire fonctionner le dispositif d'éclairage (17) et
avec un circuit de chauffage (11) couplé au circuit d'éclairage (16) pour faire fonctionner le dispositif de chauffage (8)
**caractérisé en ce que**
le circuit de commande est formé de telle sorte qu'il commande le dispositif d'éclairage (17) indépendamment du niveau du courant de chauffage qui circule dans le circuit de chauffage (11).

2. Circuit de commande selon la revendication 1
**caractérisé en ce que**
le circuit de commande commande la puissance du dispositif de chauffage (8).

3. Circuit de commande selon la revendication 2
**caractérisé en ce que**
le circuit de commande commande la puissance du dispositif de chauffage (8) indépendamment du niveau du courant d'éclairage qui circule dans le circuit d'éclairage (16).

4. Circuit de commande selon la revendication 2 ou 3
**caractérisé en ce que**
le circuit de commande commande la puissance du dispositif de chauffage (8) en désactivant ou en interrompant momentanément le circuit de chauffage (11).

5. Circuit de commande selon la revendication 4
**caractérisé en ce que**
la désactivation ou l'interruption du circuit de chauffage (11) a lieu pour la durée d'une demi-onde de la tension d'alimentation (U₄₁) du circuit de chauffage (11) ou pour un multiple de celle-ci.

6. Circuit de commande selon l'une des revendications précédentes
**caractérisé en ce que**
le circuit de commande est conçu de telle sorte que le circuit de chauffage (11) et le circuit d'éclairage (16) peuvent être connectés ou déconnectés indépendamment l'un de l'autre par des interrupteurs (61, 60) présents de façon correspondante.

7. Circuit de commande selon l'une des revendications précédentes
**caractérisé en ce que**
le circuit de commande comprend un coupleur optique (52-55) qui est monté en parallèle avec le circuit de chauffage (11) et qui fournit du côté de sortie une tension (A) redressée en demi-onde.

8. Circuit de commande selon l'une des revendications précédentes
**caractérisé en ce que**
le circuit de commande comprend un compteur (57) qui enregistre le nombre des passages par zéro de la tension (U₄₁) d'une source de tension d'alimentation alternative (41) présente dans le circuit de chauffage (11).

9. Circuit de commande selon la revendication 8
**caractérisé en ce que**
le compteur (57) après un nombre réglable de passages par zéro de la tension (U₄₁) de la tension d'alimentation alternative (U₄₁) désactive ou interrompt temporairement le circuit de chauffage (11).

10. Circuit de commande selon la revendication 9
**caractérisé en ce que**
le compteur (57) est relié du côté de l'entrée à un détecteur de tension nulle (50) qui est relié du côté de l'entrée à la source de tension d'alimentation alternative (41) du circuit de chauffage (11).

11. Circuit de commande selon la revendication 8 à 10
**caractérisé en ce que**
le compteur (57) est relié du côté de la sortie à un interrupteur (62) réglable qui est placé dans le circuit de chauffage (11).

12. Circuit de commande selon la revendication 12
**caractérisé en ce que**
le compteur (57) commande de façon conductrice l'interrupteur (62) réglable lorsque le signal de sortie (E) du compteur (57) présente un haut niveau et commande, de façon à le bloquer, l'interrupteur (62) réglable lorsque le signal de sortie (E) du compteur (57) présente un niveau faible.

13. Circuit de commande selon la revendication 7 et l'une des revendications 8 à 12
**caractérisé en ce que**
le coupleur optique (52-55) est relié du côté de sortie à un comparateur (48) qui est raccordé au compteur (57) par un basculeur bistable (56).

14. Circuit de commande selon la revendication 13
**caractérisé en ce que**
l'entrée d'initialisation du basculeur bistable (56) est alimentée avec le signal de sortie (B) du comparateur (48),
le signal de sortie (D) du basculeur bistable (56) est appliqué à un raccord de libération (EN) du compteur (57) et
le signal de sortie (E) du compteur (57) est appliqué à l'entrée de réinitialisation (R) du basculeur bistable (56).

15. Circuit de commande selon la revendication 14
**caractérisé en ce que**
le basculeur bistable (56) à l'entrée de réinitialisation (R) est commandé par un flanc d'impulsion décroissant du signal de sortie (E) du compteur (57).

16. Circuit de commande selon l'une des revendications précédentes
**caractérisé en ce que**
le circuit de commande permet d'assurer une luminescence du dispositif d'éclairage (17) pour un laps de temps déterminé lorsque le circuit de chauffage (11) est déconnecté.

17. Circuit de commande selon l'une des revendications 8 à 16
**caractérisé en ce que**
le signal de sortie (E) du compteur (57) sert de signal de fonctionnement pour le circuit d'éclairage (16).

18. Circuit de commande selon la revendication 17
**caractérisé en ce que**
le signal de sortie (E) du compteur (57) est appliqué en tant que signal d'entrée à un amplificateur (49) présent dans le circuit d'éclairage (16).

19. Circuit de commande selon la revendication 17 ou 18
**caractérisé en ce que**
le signal de sortie (E) du compteur (57) est appliqué en tant que signal d'entrée à un élément de circuit OU (59) dont le signal de sortie sert de signal de fonctionnement pour le circuit d'éclairage (16), le signal de sortie (F), en tant qu'autre signal d'entrée de l'élément de circuit OU (59), étant appliqué à un multivibrateur monostable (58) dont l'entrée est alimentée avec le signal de sortie (E) du compteur (57).

20. Circuit de commande selon la revendication 19
**caractérisé en ce que**
le multivibrateur monostable (58) est déclenché par un flanc d'impulsion décroissant du signal de sortie (E) du compteur (57).

21. Circuit de commande selon l'une des revendications précédentes
**caractérisé en ce que**
le circuit de commande est conçu sous forme d'un circuit intégré.
